(19) **Europäisches Patentamt**

**European Patent Office**

**Office européen des brevets**

(11) **EP 0 920 190 B1**

(12) **EUROPEAN PATENT SPECIFICATION**

(45) Date of publication and mention
of the grant of the patent:
**20.09.2006 Bulletin 2006/38**

(51) Int Cl.:
***H04N 1/40*** (2006.01)

(21) Application number: **98121783.9**

(22) Date of filing: **16.11.1998**

(54) **Unsharp masking for draft mode rendering of digital images**

Unschärfenmaskierung für Entwurfsmoduswiedergabe von digitalen Bildern

Masquage flou pour rendre d'images numerique en mode brouillon

(84) Designated Contracting States:
**DE FR GB**

(30) Priority: **17.11.1997 US 971628**
**17.11.1997 US 971767**

(43) Date of publication of application:
**02.06.1999 Bulletin 1999/22**

(73) Proprietor: **Xerox Corporation**
**Rochester, NY 14644 (US)**

(72) Inventor: **Curry, Donald J.**
**Menlo Park, CA 94025 (US)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 0 689 159**      **EP-A- 0 694 868**
**DE-A- 4 012 364**      **GB-A- 2 165 717**
**US-A- 4 672 463**

• **PATENT ABSTRACTS OF JAPAN vol. 1998, no.**
**01, 30 January 1998 (1998-01-30) -& JP 09 244475**
**A (CANON INC), 19 September 1997 (1997-09-19)**

## Description

Unsharp masking is used in photography for highlighting edges of images. To this end, a blurred version of an image is subtracted from the original image to produce an unsharp image model. This mask is then superimposed on the original image to increase the contrast of any abrupt contrast transitions (i.e., edges) within the image. This process can be described by a linear equation:

$$I_{out} = I_{in} + C(I_{in} - I_{mask})$$

where $I_{in}$ = the original image

$I_{mask}$ = the blurred image

$C$ = a sharpening control variable

$I_{out}$ = the edge sharpened image

Such an approach is described, for instance, in GB-A-2 165 717. GB-A-2 165 717 further improves the method by introducing a plurality of processing parameters. According to the approach applied therein, edges in an image can be emphasized as well as deemphasized, if desired. Parameters can be adjusted, for instance, dependent on the contents of an image, and also color dependent, on a pixel by pixel basis.

Digital images are composed of discrete tones (e.g., often only black and white pixels), so the perceived quality of these images strongly depends on the human visual response to the printed pixel patterns that define the images. Thus, continuous tone images are most effectively represented by pixel patterns, such as halftoned pixel patterns which are optimized to create the appearance of smooth, well controlled contrast variations, while line art images, such as text, are better represented by pixel patterns which are optimized to create the appearance of sharp, crisp contrast variations. Therefore, it would be beneficial to be able to dynamically tune a digital unsharp image mask to the type of digital image that is being printed so that edge highlighting of the unsharp mask can be realized without detracting from the perceived quality of digitally printed image as a whole.

Sometimes perceived image quality is secondary to the goal of printing the fundamental information contrast of the image at the lowest possible cost Some printers have a "draft" printing mode for this purpose. The fundamental information contrast of many images is represented by the edges of the compositional elements of these images. Consequently, it would be beneficial to have a technique for generating effectively "differentiated" versions of digital images so that marking material (e.g., toner or ink) can be saved when printing these images in a "draft" mode.

The provision of a special toner saving mode employing edge enhancement techniques is known, for instance, from EP-A-0 689 159 and EP-A-0 694 868.

It is the object of the present invention, to provide an improved rendering process for digital images. This is achieved by the features of the independent claim.

Fig. 1 is a block diagram of a digital image processing system with tunable unsharp masking in accordance with this invention; and

Fig. 2 is a block diagram of a representative stage of a separable filter of the type that can be used to reduce the computational complexity of carrying out this invention.

Fig. 3 is a tone reproduction curve for a toner saver mode of operation.

While the invention is described in some detail herein with reference to a specific embodiment, it is to be understood that there is no intent to limit it to that embodiment. On the contrary, the intent is to cover all modifications, alternatives and equivalents falling within the scope of the invention as defined by the appended claims.

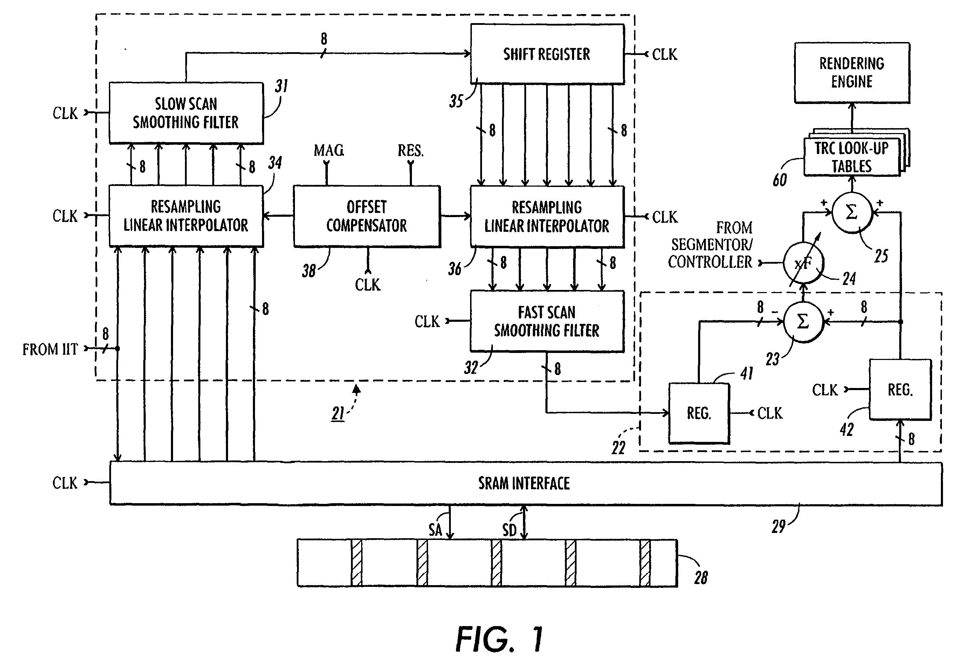

Turning now to the drawings, and at this point especially to Fig. 1, an original image is represented at a suitable resolution, such as 300 dots per inch (d.p.i.) by pixel values (typically 8-bit values) which are serially received in raster scan order (say, left-to-right/top-to-bottom order) from a suitable image input terminal (IIT). As a general rule, the IIT is a scanner subsystem.

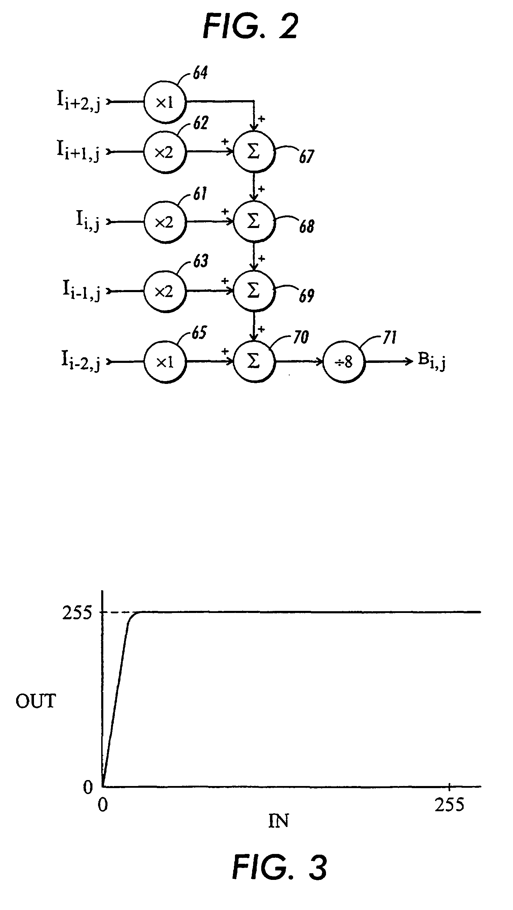

To carry out the unsharp masking of the digital images that is contemplated by this invention, there is an image resampling, contextually sensitive smoothing filter 21 for feeding a blurred version of the original image to a low pass filter 22 at the desired output resolution and magnification. The low pass filter 22 effectively "differentiates" (i.e., edge enhances) this blurred image by essentially passing black and near black pixel values (i.e., pixels having near 0 values) while transforming all other pixel values toward white (e.g., toward a value of 255). See Fig. 3.

A summer 23 computes the difference between the original image and the edge enhanced version of the image to provide an unsharp mask of the original image. A variable multiplier 24 then weights this unsharp mask in accordance with an adjustable weighting factor F. Finally, a summer 25 then additively combines this weighted unsharp mask with the original image for rendering of the unsharp masked image at the selected magnification and resolution by a suitable rendering engine 26.

As illustrated, an SRAM memory 28 functions as a randomly addressable FIFO ring buffer for sharing the pixel values which are needed to compute the blurred and unsharp masked versions of the original image. It has been found that only about five scan lines of context are required to satisfactorily compute the blurred image, so the SRAM 28 is sized accordingly. Data is transferred back and forth between the SRAM 28 and an SRAM interface 29 via a data path SD, and the locations within which these data reads and writes are performed are determined by the addresses carried on an address path SA.

To reduce the computational complexity, the smoothing filter 21 is a so-called separable filter having two sections, 31 and 32, one for contextually smoothing the image in the slowscan direction (i.e., the process direction) and the other for contextually smoothing the image in the orthogonal or fast scan direction. Thus, as shown, the original input image first is resampled by a linear interpolator 34 and then is smoothed in the slow scan direction by the first section 31 of the filter 21. This provides an intermediate representation of the image, so sufficient context of this intermediate representation to carry out the smoothing of the image in the fast scan direction is stored in a shift register 35 which has an output post from each of its stages. Thus, the fast scan context that is accumulated by the shift register 35 is resampled by another linear interpolator 36 and then smoothed in the fast scan direction by the second stage 32 of the smoothing filter 21.

Typically, each section of the filter 21 comprises, as shown in Fig. 2, multipiers 61-65 for multiplying the current pixel value and its nearest vertical or horizontal neighbors by weights of 2,2,2,1 and 1, respectively, (or 1,2,2,2,1 as viewed with the filter centered on the current pixel). These weighted pixel values then are summed by summer 67-70. Finally, the aggregate of the sums is divided by the sum of the weights in a divider 71. As is known, multiplying and dividing powers of 2 corresponds to shifts in one direction or the other when implemented in hardware.

As will be appreciated, the original image is effectively stepped across the smoothing filter 21 in context and at a desired magnification and resolution. The magnification may cause the image to step across the smoothing filter 21 in steps that are not integer multiples of the original scan pitch, so an offset compensator 38 is provided for causing the resampling linear interpolators 34 and 36 to substantially compensate for any displacement of the pixel center positions in the magnified image from the center positions of the corresponding pixels in the original image. One additional line of context usually is sufficient to enable the interpolator 34 to perform this compensation in the slow scan direction. In the slow scan direction, however, the interpolator 36 may not only have to compensate for magnification caused pixel center offsets, but may also have to compensate for resolution mismatches (such as when an image that is scanned at 300 d.p.i., is rendered at 600 d.p.i.).

An image processing pipeline is employed to carry out this invention, so that data is synchronously transferred from step-to-step of the process. The registers 41 and 42 through which the blurred and the original image are respectively shifted for computing the unsharp mask and the unsharp masked output image are part of this pipeline.

In accordance with the present invention, the weighting factor F for the unsharp mask is adjustable by varying the multiplication of the multiplier 24. This weighting may be dynamically adjusted on, say, a pixel-by-pixel basis in response to, say, a logical image type characterizing signal supplied by an image segmentor (not shown). Alternatively, the weighting factor F of the multiplier 24 may be controlled in response to the manual manipulation of a mode switch (also not shown). Or, the dynamic and manual control of the weighting factor F may be combined. The unsharp mask tends to soften or sharpen the rendered image depending on whether the weighting factor F is less than or greater than 1. Thus, for example, the weighting factor F may be selected to be about (a) 0.8 for the printing of continuous tone images to cause the unsharp mask to soften the edge detail, (b) 1.2 for the printing of line art images to cause the unsharp mask to enhance the image edges, or (c) 2.0 or higher for draft mode printing to cause the unsharp mask to strongly dominate the rendering in the interest of saving marking material. If the weighting factor F is only manually controllable, it may be set to a value of about 1.0 for a normal print mode and to a value of about 2.0 for a draft or toner/ink saver mode.

As shown, the output pixel values are adjusted to provide the desired tranform function for each selected mode of operation of the rendering engines by a mode dependent look-up table 60. For example, as illustrated in Fig. 3, there is an extreme example of a so-called tone reproduction curve that is characteristic of the toner saver mode of operation.

## Claims

1. A process for operating an engine that renders digitally represented images comprising the steps of:

   producing a digitally represented unsharp mask of such an image; and
   combining said unsharp mask with said image with a weight (F) being given to said unsharp mask;
   **characterized in that**
   said process selectively operating said engine in a reduced marking material mode and at least one other mode, and
   by further comprising the step of setting said weight (F) for the unsharp mask dependent on said mode for operating said engine to be relatively high for said reduced marking material mode and substantially lower for said other mode.

**2.** A process according to claim 1, wherein said relatively high weight for said reduced marking material mode is about 2.0 or higher.

**3.** A process according to claim 1 or 2, wherein said substantially lower weight for said other mode is about 1.0.

**4.** A process according to any of claims 1 to 3, wherein the step of producing the digitally represented unsharp mask comprises:

> smoothing the image in a slow scan direction to obtain an intermediate representation;
> smoothing the intermediate representation in a fast scan direction to obtain a blurred version of the image;
> edge-enhancing said blurred version by transforming all non-black pixels towards white; and obtaining the digitally represented unsharp mask by taking the difference between the edge-enhanced blurred version and the image.

**5.** A process according to any of claims 1 to 4, further comprising, after said combining step, the step of adjusting the output pixel values by a mode dependent look-up table (60).

**Patentansprüche**

**1.** Prozess zum Betreiben einer Maschine, die digital dargestellte Bilder aufbereitet, umfassend die Schritte:

> Erzeugen einer digital dargestellten unscharfen Maske eines solchen Bildes; und
> Kombinieren der unscharfen Maske mit dem Bild, wobei der unscharfen Maske eine Wichtung (F) gegeben wird,
> **dadurch gekennzeichnet, dass**
> der Prozess die Maschine selektiv in einem Modus mit reduziertem Markierungsmaterial und wenigstens einem anderen Modus betreibt, und weiterhin den Schritt des Setzens der Wichtung (F) für die unscharfe Maske in Abhängigkeit vom Modus für den Betrieb der Maschine umfasst, so dass die Wichtung relativ hoch für den Modus mit reduziertem Markierungsmaterial und wesentlich niedriger für den anderen Modus ist.

**2.** Prozess nach Anspruch 1, wobei die relativ hohe Wichtung für den Modus mit reduziertem Markierungsmaterial ungefähr 2,0 oder höher ist.

**3.** Prozess nach Anspruch 1 oder 2, wobei die wesentlich niedrigere Wichtung für den anderen Modus ungefähr 1,0 ist.

**4.** Prozess nach einem der Ansprüche 1 bis 3, wobei der Schritt des Erzeugens der digital repräsentierten unscharfen Maske umfasst:

> Glätten des Bildes in einer langsamen Abtastrichtung, um eine Zwischendarstellung zu erhalten,
> Glätten der Zwischendarstellung in einer schnellen Abtastrichtung, um eine verwaschene Version des Bildes zu erhalten,
> Betonen der Kanten der verwaschenen Version durch Transformieren aller nicht schwarzen Pixel in Richtung weiß, und
> Erhalten der digital dargestellten unscharfen Maske durch Bilden der Differenz der kantenbetonten verwaschenen Version und des Bildes.

**5.** Prozess nach einem der Ansprüche 1 bis 4, nach dem Kombinierschritt weiterhin umfassend den Schritt des Einstellens der Ausgabepixelwerte durch eine modusabhängige Nachschlagetabelle.

**Revendications**

**1.** Procédé de mise en oeuvre d'un moteur qui restitue des images à représentation numérique, comprenant les étapes consistant à :

> générer un masque flou à représentation numérique d'une telle image ; et
> combiner ledit masque flou avec ladite image avec une pondération (F) appliquée audit masque flou ;
> **caractérisé en ce que**
> ledit procédé met en oeuvre sélectivement ledit moteur dans un mode de matériau de marquage réduit et dans au moins un autre mode, et qu'il comprend en outre l'étape consistant à fixer ladite pondération (F) pour le masque flou en fonction dudit mode de mise en oeuvre dudit moteur à une valeur relativement élevée pour ledit mode de matériau de marquage réduit et sensiblement plus faible pour ledit autre mode.

**2.** Procédé selon la revendication 1, dans lequel ladite pondération relativement élevée pour ledit mode de matériau de marquage réduit est égale ou supérieure à environ 2,0.

**3.** Procédé selon la revendication 1 ou 2, dans lequel ladite pondération sensiblement plus faible pour ledit autre mode est d'environ 1,0.

**4.** Procédé selon l'une quelconque des revendications 1 à 3, dans lequel l'étape consistant à générer le masque flou à représentation numérique comprend :

le lissage de l'image dans une direction de balayage lent afin d'obtenir une représentation intermédiaire ;

le lissage de la représentation intermédiaire dans une direction de balayage rapide afin d'obtenir une version floue de l'image ;

l'amélioration des bords de ladite version floue par transformation de tous les pixels non noirs en pixels blancs ; et

l'obtention du masque flou à représentation numérique en prenant la différence entre la version floue à bords améliorés et l'image.

**5.** Procédé selon l'une quelconque des revendications 1 à 4, comprenant en outre, après ladite étape de combinaison, une étape consistant à régler les valeurs des pixels de sortie selon un tableau de référence (60) dépendant du mode.

FIG. 1

## FIG. 2

$I_{i+2,j}$ → (×1) 64

$I_{i+1,j}$ → (×2) 62 → + (Σ) 67 +

$I_{i,j}$ → (×2) 61 → + (Σ) 68 +

$I_{i-1,j}$ → (×2) 63 → + (Σ) 69 +

$I_{i-2,j}$ → (×1) 65 → + (Σ) 70 → (÷8) 71 → $B_{i,j}$

255

OUT

0

0                    IN                    255

## FIG. 3